(19) **Europäisches Patentamt / European Patent Office / Office européen des brevets**

(11) **EP 2 609 473 B1**

(12) **FASCICULE DE BREVET EUROPEEN**

(45) Date de publication et mention
de la délivrance du brevet:
**24.02.2016 Bulletin 2016/08**

(21) Numéro de dépôt: **11737975.0**

(22) Date de dépôt: **01.08.2011**

(51) Int Cl.:
***G05B 17/02*** *(2006.01)*

(86) Numéro de dépôt international:
**PCT/EP2011/063218**

(87) Numéro de publication internationale:
**WO 2012/025337 (01.03.2012 Gazette 2012/09)**

(54) **PROCEDE DE DETERMINATION DE PARAMETRES DE REGULATION D'UN SYSTEME HVAC**

VERFAHREN ZUR DEFINITION VON PARAMETERN ZUR STEUERUNG EINES HVAC-SYSTEMS

METHOD FOR DETERMINING PARAMETERS FOR CONTROLLING AN HVAC SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.08.2010 FR 1056751**

(43) Date de publication de la demande:
**03.07.2013 Bulletin 2013/27**

(73) Titulaire: **Schneider Electric Industries SAS
92500 Rueil-Malmaison (FR)**

(72) Inventeur: **LIGERET, Christophe
F-38000 Grenoble (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**US-A1- 2003 018 399**

**Description**

**DOMAINE TECHNIQUE**

L'invention concerne le domaine du contrôle-commande d'un système, ou machine, HVAC (« Heating, Ventilation and Air-Conditioning », ou chauffage, ventilation et climatisation). L'invention concerne plus particulièrement un procédé permettant de déterminer des paramètres de régulation d'un tel système HVAC et d'optimiser la consommation énergétique de ce système.

**ÉTAT DE LA TECHNIQUE ANTÉRIEURE**

Les solutions actuellement implémentées pour réaliser une régulation d'un système HVAC ne sont pas optimales en termes de performance, de fiabilité et d'efficacité énergétique obtenues. Ceci est généralement dû au fait que l'utilisateur de systèmes HVAC a peu de connaissances dans les domaines de la régulation ou de l'optimisation énergétique. En effet, le réglage des paramètres des boucles de régulation existantes des systèmes HVAC se fait bien souvent par habitude, ce qui peut engendrer des difficultés de régulation au sein des systèmes (dépassements importants, phénomènes de pompages, instabilités...), ces difficultés se traduisant par des pertes énergétiques et des risques de casse du matériel mal régulé. De même, la détermination des points de fonctionnement se fait également par habitude et non sur une maîtrise parfaite du processus : par exemple, la haute pression flottante sur les pompes à chaleur est généralement déterminée par un écart constant entre la température de condensation et la température extérieure.

Il existe des outils permettant de réaliser une bonne régulation, comme par exemple l'implémentation d'algorithmes avancés tels que la commande prédictive, ou des fonctions d'optimisation énergétique. Toutefois, de tels outils sont très difficiles à mettre en oeuvre par un utilisateur non expert de ces domaines.

US2003/0018399 décrit un procéde d'optimisation d'un système

**EXPOSÉ DE L'INVENTION**

Un but de la présente invention est de proposer un procédé de détermination de paramètres de régulation d'un système HVAC améliorant le contrôle-commande du système HVAC, permettant notamment de réduire la consommation énergétique du système HVAC et d'augmenter la fiabilité de fonctionnement du système ainsi régulé.

Pour cela, la présente invention propose un procédé de détermination de paramètres de régulation d'un système HVAC comportant des éléments thermiques destinés à être régulés par des boucles de régulation, caractérisé en ce qu'il comporte au moins les étapes suivantes :

- simulation en régime permanent du comportement thermique et électrique du système HVAC modélisé par des modèles mathématiques du comportement thermique et électrique des éléments thermiques du système HVAC, calculant la consommation énergétique du système HVAC modélisé pour différentes valeurs de grandeurs physiques influant sur les performances énergétiques des éléments thermiques, et différentes valeurs de points de consigne destinés à être appliqués en entrée des boucles de régulation,
- détermination des valeurs de points de consigne pour lesquels la consommation énergétique du système HVAC modélisé est la plus faible,
- simulation en régime dynamique du comportement thermique et électrique du système HVAC modélisé, calculant des valeurs de grandeurs physiques de sortie des éléments thermiques,
- calcul, à partir desdites valeurs des grandeurs physiques de sortie et pour chacune des boucles de régulation, des valeurs de paramètres des boucles de régulation.

Ce procédé permet de déterminer des paramètres de régulation à partir desquels il est possible de programmer de manière simple, sans nécessiter d'expertise de la part de l'utilisateur dans les domaines de l'automatique, de la régulation, de l'optimisation ou du diagnostic, le ou les contrôleurs programmables d'un système HVAC.

Ce procédé permet de gérer deux aspects : la régulation proprement dite du système, mais également l'optimisation de la consommation énergétique, par exemple la consommation électrique, du système HVAC.

Ainsi, le contrôle-commande plus performant obtenu grâce au procédé permet de résoudre les problèmes liés aux difficultés de régulation, aux inefficacités énergétiques et éventuellement à la mise en place de fonctions de diagnostic.

Ce procédé permet enfin à un utilisateur non expert en automatique de mettre facilement en oeuvre une régulation d'un système HVAC.

Au cours de ce procédé, on réalise une simulation en régime permanent du comportement thermique et électrique du système HVAC modélisé. Un tel régime permanent correspond à un état stable dans le temps du système HVAC, c'est-à-dire un état dans lequel les variations des signaux du système, notamment les grandeurs physiques de sortie et les signaux de commande, sont sensiblement nulles dans le temps (c'est-à-dire, pour un signal x du système, tel que dx/dt = 0). Dans le cadre du présent document, un "régime permanent" ne signifie donc pas un état qui est présent "en permanence" dans le temps, mais plutôt un état stable.

Le régime dynamique du système HVAC modélisé correspond à un état non stable dans le temps du système HVAC provoqué en faisant varier la valeur d'un signal sur au moins une entrée du système, c'est-à-dire en appliquant un signal transitoire sur cette entrée du système. Dans le cadre du présent document, un signal "transitoire" correspond à un signal qui peut varier dans le temps. Le régime dynamique est donc un état temporaire suite à une modification sur au moins une entrée du système.

La simulation en régime dynamique du comportement thermique et électrique du système HVAC modélisé peut donc être réalisée en faisant varier des valeurs de signaux en entrée des éléments thermiques du système HVAC modélisé, le calcul des valeurs des paramètres des boucles de régulation pouvant être réalisé à partir de paramètres de fonctions de transfert des éléments thermiques correspondant aux rapports entre les valeurs des grandeurs physiques de sortie des éléments thermiques et les valeurs des signaux en entrée des éléments thermiques.

Les boucles de régulation peuvent être de préférence du type à commande prédictive. Ainsi, le procédé peut mettre en oeuvre des techniques de commande avancée du système HVAC, par exemple une commande PFC (« Predictive Functionnal Command »).

La simulation en régime dynamique du comportement thermique et électrique du système HVAC modélisé peut être réalisée en appliquant successivement, sur les entrées de chaque élément thermique, des variations de signaux de type échelon.

La simulation en régime dynamique du comportement thermique et électrique du système HVAC modélisé peut être réalisée pour des valeurs des points de consigne pour lesquels la consommation énergétique du système HVAC modélisé est la plus faible.

L'invention concerne également un procédé de régulation d'un système HVAC comportant des éléments thermiques, comportant au moins les étapes de :

- modélisation thermique et électrique du système HVAC par des modèles mathématiques du comportement thermique et électrique des éléments thermiques du système HVAC,
- définition de boucles de régulation dans le système HVAC modélisé, destinées à être mises en oeuvre par au moins un contrôleur du système HVAC, chaque boucle de régulation étant associée à au moins un élément thermique du système HVAC et prenant en compte des grandeurs physiques influant sur les performances énergétiques dudit élément thermique et les performances de la régulation dudit élément thermique,

- mise en oeuvre d'un procédé de détermination de paramètres de régulation du système HVAC tel que décrit précédemment,
- programmation du contrôleur du système HVAC à partir des valeurs des points de consigne et des valeurs des paramètres des boucles de régulation calculées lors du procédé de détermination des paramètres de régulation du système HVAC.

La modélisation thermique et électrique du système HVAC peut comporter au moins les étapes de :

- description des éléments thermiques du système HVAC dans un logiciel de description associant le comportement thermique de chaque type d'élément thermique à un desdits modèles mathématiques,
- description, dans le logiciel de description, de liaisons hydrauliques et/ou électriques entre les éléments thermiques.

La définition des boucles de régulation peut comporter des étapes de description, dans le logiciel, de :

- régulateurs aptes à effectuer une régulation en boucle fermée des éléments thermiques associés aux boucles de régulation,
- capteurs de mesure des grandeurs physiques de sortie des éléments thermiques disposés sur les liaisons hydrauliques, dont les mesures sont destinées à être délivrées en tant que signaux d'entrée aux régulateurs,
- pré-actionneurs associés aux éléments thermiques et destinés à recevoir en entrée des signaux de commande délivrés par les régulateurs.

Le procédé peut comporter en outre, préalablement à la mise en oeuvre du procédé de détermination des paramètres de régulation du système HVAC, une étape de définition de gammes de valeurs possibles des signaux de commande destinés à être délivrés par les régulateurs. Ainsi, l'utilisateur peut préciser des gammes de fonctionnement du système.

La simulation en régime permanent du comportement thermique du système HVAC modélisé peut déterminer en outre des valeurs de signaux de commande destinés à être appliqués en entrée des éléments thermiques.

La définition des boucles de régulation peut comporter en outre une définition de gammes de valeurs possibles des points de consigne des boucles de régulation. Ainsi, l'utilisateur peut spécifier le ou les points de fonctionnement du système pour lesquels les simulations sont réalisées.

Le procédé peut comporter en outre, préalablement à la mise en oeuvre du procédé de détermination des paramètres de régulation du système HVAC, une étape de définition de gammes de valeurs possibles des grandeurs physiques.

Lorsque le contrôleur du système HVAC est un contrôleur programmable, la programmation du contrôleur peut être réalisée au moins par la mise en oeuvre des étapes suivantes :

- définition d'interactions, dans un logiciel de programmation de contrôleur, entre des algorithmes relatifs à l'optimisation énergétique du système HVAC basés sur lesdites valeurs déterminées des points de consigne et des algorithmes relatifs à la régulation du système HVAC basés sur lesdites valeurs calculées des paramètres des boucles de régulation,
- génération d'un programme de commande codant lesdits algorithmes et les interactions précédemment définies,
- chargement du programme de commande dans le contrôleur programmable.

Lorsque le contrôleur du système HVAC est un contrôleur paramétrable, la programmation du contrôleur peut comporter au moins une étape d'entrée des valeurs déterminées des points de consigne et des valeurs calculées des paramètres des boucles de régulation dans le contrôleur.

La programmation du contrôleur du système HVAC peut être réalisée à partir de données dans lesquelles les valeurs des points de consigne et les valeurs des paramètres des boucles de régulation calculées lors du procédé de détermination des paramètres de régulation du système HVAC sont cryptées.

L'invention concerne également un dispositif de détermination de paramètres de régulation d'un système HVAC comportant des éléments thermiques destinés à être régulés par des boucles de régulation, comportant des moyens de mises en oeuvre d'un procédé de détermination de paramètres de régulation d'un système HVAC tel que décrit précédemment.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente schématiquement un système HVAC destiné à être régulé par un procédé objet de la présente invention ;
- la figure 2 représente schématiquement une régulation réalisée pour un des éléments thermiques d'un système HVAC par le procédé objet de la présente invention ;
- la figure 3 représente les étapes d'un procédé de régulation d'un système HVAC, objet de la présente invention ;
- les figures 4 à 6 représentent des captures d'écran du logiciel de description utilisé lors d'un procédé de détermination de paramètres de régulation et d'un procédé de régulation d'un système HVAC, objets de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## DESCRIPTION DÉTAILLÉE

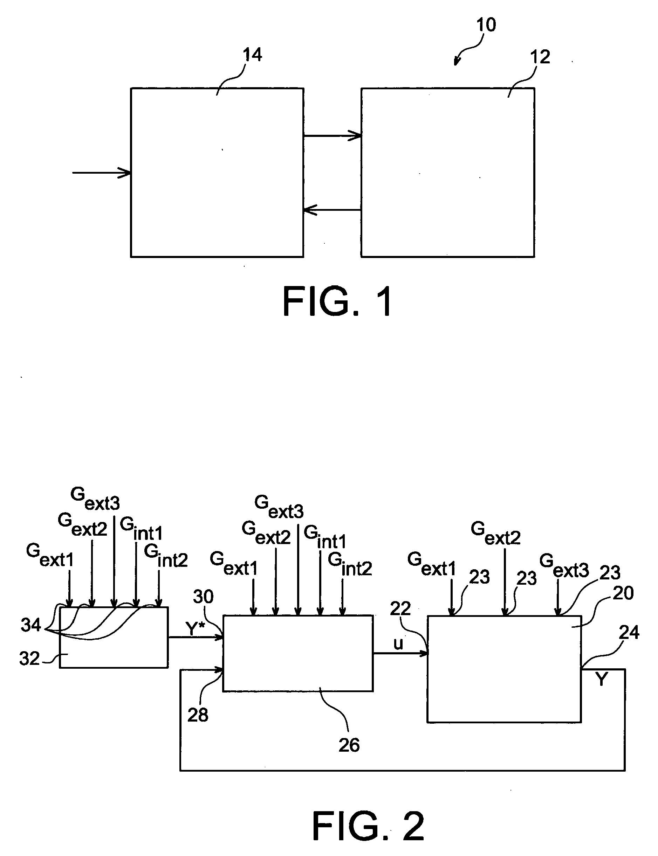

On se réfère tout d'abord à la figure 1 qui représente schématiquement un système HVAC 10 destiné à être régulé.

Le système HVAC 10 représenté sur la figure 1 comporte une partie opérative 12 formée par les différents éléments, ou différents composants, du système HVAC 10 à réguler (compresseurs, vannes, échangeurs thermiques, capteurs, etc.) et une partie commande 14 comprenant un ou plusieurs contrôleurs dans lesquels des fonctions de contrôle-commande, de préférence avancées, sont destinées à être intégrées. Ces fonctions de contrôle-commande sont destinées à réguler les différents éléments de la partie opérative 12 du système 10, mais également à optimiser la consommation énergétique de ces éléments.

On décrit maintenant la régulation et l'optimisation énergétique qui vont être réalisées pour chacun des éléments du système HVAC 10 par le procédé de régulation et d'optimisation énergétique, en liaison avec la figure 2 sur laquelle un exemple de régulation et d'optimisation énergétique réalisées pour un des éléments thermiques du système HVAC 10 est décrit.

Sur cette figure, un élément thermique 20, par exemple un condenseur, du système HVAC 10 est représenté. L'élément thermique 20 reçoit sur une entrée 22 un signal de commande u destiné à piloter l'élément thermique 20. Une grandeur physique y de sortie de l'élément 20, par exemple une pression ou une température du fluide frigorigène en sortie de l'élément 20, est mesurée sur une sortie 24 de l'élément 20 et servira à la régulation de l'élément thermique 20. La relation entre la grandeur physique y et le signal de commande u correspond à une première fonction de transfert $H_1(s)$ de l'élément thermique 20.

Pour chacun des éléments thermiques du système HVAC 10, la valeur de la grandeur physique y de sortie dépend de la valeur du signal de commande u appliqué en entrée de l'élément 20, mais dépend également de valeurs d'autres paramètres, appelés grandeurs physiques externes influant sur les performances énergétiques de l'élément thermique, et donc du système HVAC. De telles grandeurs physiques externes sont par exemple une température extérieure, une température d'un fluide entrant dans la machine, un débit, un taux de charge, un retard, etc. Sur l'exemple de la figure 2, trois grandeurs physiques externes sont représentées sous la forme de variables Gext1, Gext2 et Gext3 appliquées sur des secondes entrées 23 de l'élément 20. Les relations entre la valeur de la grandeur physique y et chacune des grandeurs physiques externes Gext1, Gext2 et Gext3 correspondent à des secondes fonctions de transfert $H_2(s)$, $H_3(s)$ et $H_4(s)$ de l'élément thermique 20, dont les sorties s'ajoutent à celle de la première fonction de transfert $H_1(s)$ pour obtenir la grandeur physique de sortie y.

La régulation de l'élément thermique 20 est réalisée par une boucle de régulation 26 déterminant la valeur du signal de commande u destiné à être appliqué sur l'entrée 22 de l'élément thermique 20 à partir de la valeur de la grandeur physique y qui est appliquée sur une première entrée 28 de la boucle de régulation 26, d'un point de consigne de régulation y* appliqué sur une seconde entrée 30 de la boucle de régulation 26, des mesures des grandeurs physiques externes Gext1, Gext2 et Gext3, mais également de certaines grandeurs physiques internes de l'élément thermique 20 influant les performances de la régulation de l'élément thermique 20.

La valeur du point de consigne de régulation y* est déterminée par un générateur de point de consigne 32 qui permet, à partir des grandeurs physiques externes Gext1, Gext2 et Gext3 mais également par au moins une partie des grandeurs physiques internes de l'élément thermique 20 (par exemple une commande de compresseur) et appliquées sur des entrées 34 du générateur de point de consigne 32, de déterminer le meilleur point de consigne à appliquer en entrée de la boucle de régulation 26 pour minimiser la consommation énergétique de l'élément thermique 20. Par exemple, pour l'optimisation du point de consigne de la haute pression, les grandeurs physiques à prendre en compte peuvent être la température d'air extérieur, la commande des compresseurs, et la basse pression. Sur l'exemple de la figure 2, deux grandeurs physiques internes Gint1 et Gint2 sont prises en compte et appliquées en entrée du générateur de point de consigne 32. La boucle de régulation 26 réalise la partie régulation du contrôle-commande de l'élément thermique 20, le générateur de point de consigne 32 formant la partie optimisation énergétique de ce contrôle-commande.

La boucle de régulation 26 peut mettre en oeuvre différents types de régulation, par exemple une régulation de type PID. Toutefois, la boucle de régulation réalisera avantageusement une régulation de type PFC (« Predictive Functionnal Control » en anglais), ou commande prédictive, qui permet, par rapport à une régulation PID, d'utiliser un modèle dynamique du processus de régulation à l'intérieur du contrôleur (partie commande 14 du système HVAC 10) et en temps réel réalisant la boucle de régulation 26 afin d'anticiper le futur comportement de l'élément thermique 20. La mise en oeuvre d'une régulation de type PFC est par exemple décrite dans l'ouvrage de J. Richalet et al. : « La commande prédictive. Mise en oeuvre et applications industrielles », Editions Eyrolles.

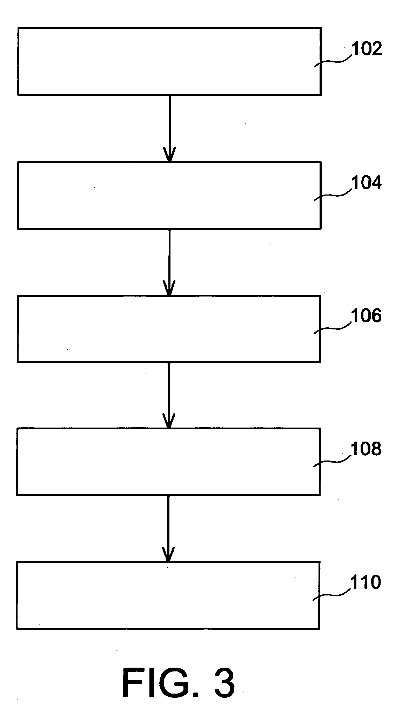

Les étapes du procédé de régulation et d'optimisation énergétique du système HVAC 10 mis en oeuvre, permettant de réaliser la régulation des éléments thermiques du système HVAC 10 précédemment décrite et de paramétrer les différents algorithmes de régulation utilisés, vont être décrites en liaison avec la figure 3.

Dans un premier temps, l'utilisateur décrit, par exemple dans un logiciel servant d'outil de description, la partie opérative 12 du système HVAC 10. Cette description porte à la fois sur l'architecture du système HVAC 10, c'est-à-dire sur les liens entre les différents éléments thermiques 20 du système HVAC 10, et sur les caractéristiques intrinsèques des éléments thermiques 20 et les domaines de fonctionnement nominaux du système 10 (étape 102).

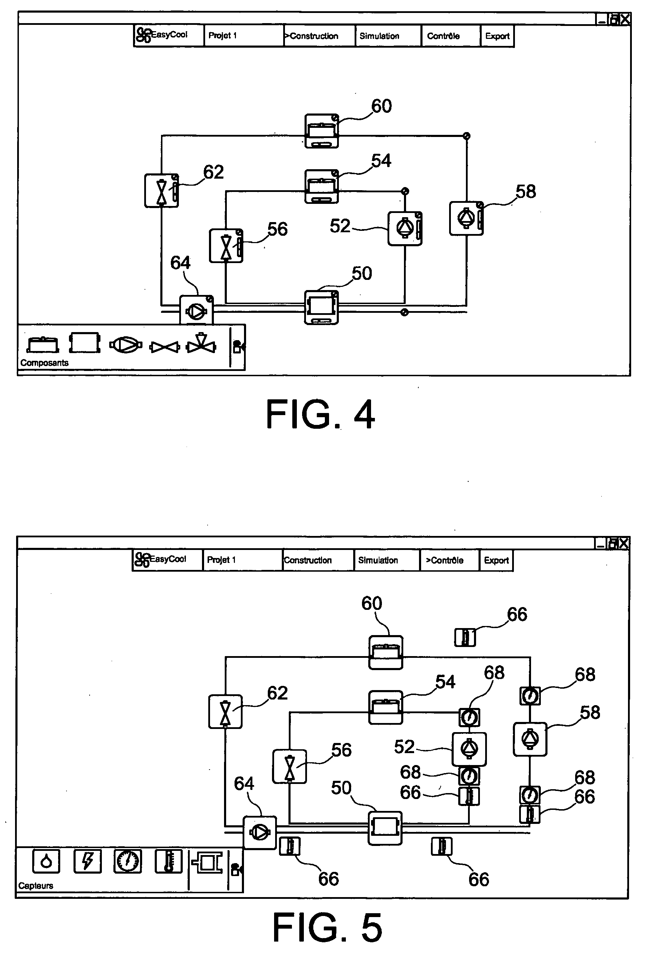

L'utilisateur décrit donc, dans un premier temps, l'architecture du système HVAC 10 en choisissant, dans le logiciel, des composants génériques représentant chacun des éléments thermiques 20 du système 10 (échangeurs de chaleur, vannes, compresseurs, pompes, ventilateurs, ...), puis en créant les liens entre les éléments thermiques (en les reliant par des tuyaux, des câbles, ...). Chacun des composants génériques présents dans le logiciel correspond à une modélisation mathématique du comportement thermique et électrique d'un élément thermique du système HVAC. Ainsi, la description réalisée par l'utilisateur forme donc, dans le logiciel, une modélisation mathématique de l'architecture générale du système HVAC 10. Un exemple de description réalisée par l'utilisateur est représenté sur la figure 4. Sur cette figure 4, le système HVAC 10 comporte un premier circuit composé d'un évaporateur 50 dont une sortie est reliée à un premier compresseur 52. La sortie du premier compresseur 52 est reliée à une entrée d'un premier condenseur 54 dont la sortie est reliée à une première valve d'expansion 56. Une sortie de la première valve d'expansion 56 est reliée à l'entrée de l'évaporateur 50. Ce système HVAC 10 comporte également un second circuit formé par l'évaporateur 50 dont une sortie est reliée à un second compresseur 58. La sortie du second compresseur 58 est reliée à une entrée d'un second condenseur 60. Une sortie de ce second condenseur 60 est reliée à une seconde valve d'expansion 62 dont une sortie est reliée à une pompe 64 elle-même reliée à l'évaporateur 50.

Une fois l'architecture générale du système décrite, l'utilisateur décrit alors individuellement les caractéristiques de chacun des éléments thermiques de cette architecture du système HVAC 10.

Pour cela, le logiciel de description peut comporter une bibliothèque dans laquelle sont stockées les caractéristiques d'éléments existants. Le travail de l'utilisateur consiste alors à sélectionner une référence dans la bibliothèque. Cette sélection peut être assistée par des fonctions de filtrage : l'utilisateur peut par exemple renseigner des informations sur l'élément (par exemple pour un échangeur : plaques, tubes et calandres, puissance nominale, nom du fabriquant, ...), lui permettant d'avoir accès soit directement à l'élément, soit à une liste réduite d'éléments potentiels.

Si l'élément n'est pas présent dans la bibliothèque, ou si le logiciel ne comporte pas une telle bibliothèque, l'utilisateur peut décrire complètement le composant en renseignant une liste de caractéristiques correspondant à cet élément (par exemple, pour un échangeur à plaques : l'écoulement contre-courant ou co-courant, le nombre de plaques, l'espacement entre plaques, l'angle de corrugation, la largeur et la hauteur de chaque plaque, le matériau des plaques, la masse à vide de l'échangeur, décrire si l'échangeur est isolé thermiquement, ...). Les caractéristiques à renseigner dépendent du type d'élément (pompe, condenseur, compresseur, ...).

Il est également possible d'importer dans le logiciel de description un fichier comportant les caractéristiques des éléments à décrire, par exemple sous la forme d'un tableau de points, c'est-à-dire d'une ou plusieurs tables de valeurs donnant les valeurs des paramètres de sortie (pression, débit de fluides, ...) des éléments du système HVAC en fonction des valeurs de paramètres d'entrée de ces éléments (température d'entrée, puissance, débit d'eau, ...). Un tel fichier peut être un fichier bibliothèque de type DLL. Un lien est réalisé entre les entrées / sorties du modèle importé et les entrées / sorties de l'élément modélisé dans le logiciel.

Dans une variante, cette description de la partie opérative du système HVAC 10 peut être réalisée par l'utilisateur en répondant à une liste de questions prédéfinies dans le logiciel de description, chacune des questions portant par exemple sur un ou plusieurs paramètres d'un des éléments thermiques du système HVAC 10. Une telle description du système HVAC peut être réalisée lorsque le système HVAC forme un ensemble de machines fini, c'est-à-dire un système HVAC dont l'architecture est prédéfinie dans le logiciel de description et non modifiée par l'utilisateur.

Ainsi, les informations que l'utilisateur rentre sont faciles à obtenir et correspondent à des données concernant les éléments du système HVAC 10 que l'utilisateur est à même de comprendre : par exemple, si l'utilisateur est un frigoriste, ces données sont des références d'échangeurs, des caractéristiques mécaniques d'échangeurs (nombre de plaques, espace entre plaques, longueur, largeur des plaques...), ou encore des tables de données fournies par les constructeurs (par exemple, pour des compresseurs, ces tables de données peuvent comporter les valeurs de la Basse Pression, de la Haute Pression, de la Température d'aspiration, du débit de fluide frigorigène, etc.).

L'utilisateur décrit ensuite, dans le logiciel de description, le contrôle-commande du système, c'est-à-dire les boucles de régulation du système permettant de réguler les différents éléments thermiques du système HVAC (étape 104). Ainsi, pour chaque boucle de régulation à implémenter sur le système, correspondant à la boucle de régulation 26 précédemment décrite en liaison avec la figure 2, dont le nombre correspond aux nombres d'éléments thermiques à réguler du système HVAC, l'utilisateur indique la grandeur physique obtenue en sortie d'un élément thermique qu'il souhaite réguler, l'actionneur qu'il souhaite piloter pour cette boucle et une valeur de consigne qu'il souhaite appliquer.

Pour cela, l'utilisateur reprend la modélisation du système précédemment réalisée dans le logiciel de description et place tout d'abord des capteurs sur les grandeurs physiques qu'il souhaite mesurer et qui sont destinées à être régulées. Ainsi, sur l'exemple de la figure 5, plusieurs capteurs de température 66 et capteurs de pression 68 sont disposés en aval et en amont de plusieurs éléments du système.

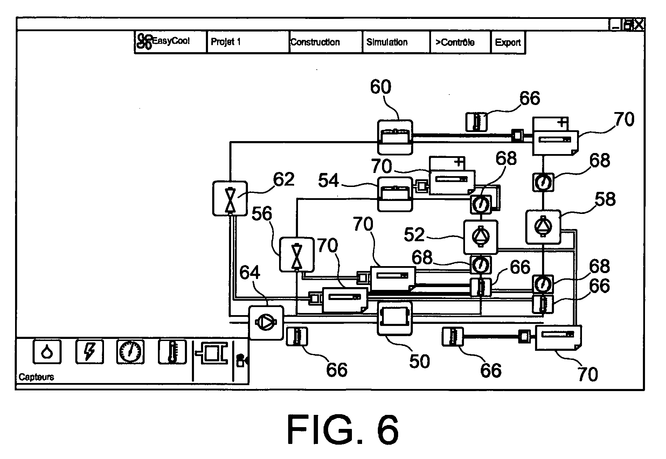

Des pré-actionneurs sont ensuite positionnés sur les actionneurs du système HVAC 10 à piloter, c'est-à-dire sur les actionneurs des compresseurs 52 et 58, des condenseurs 54 et 60, et les actionneurs des valves d'expansion 56 et 62. Ces pré-actionneurs sont destinés à recevoir en entrée les valeurs des signaux de commande délivrés par les boucles de régulations. L'utilisateur relie ensuite les capteurs 66, 68 et les pré-actionneurs aux boîtes de régulation 70 qui seront typées selon la nature de la grandeur physique de sortie à réguler (par exemple : boîte de régulation de vitesse, de régulation de surchauffe, de régulation de pression, de régulation de température, de régulation de delta de pression, etc.), mais également en fonction du type de régulation souhaité, notamment PID ou commande prédictive. Enfin, l'utilisateur définit, dans les boîtes de régulation 70, les plages de fonctionnement désirées, c'est-à-dire les gammes de valeurs possibles des points de consigne des boucles (figure 6).

De manière analogue à la description de la partie opérative du système HVAC précédemment réalisée, la description du contrôle-commande du système HVAC 10 peut être réalisée par l'utilisateur en répondant à une liste de questions prédéfinies dans le logiciel de description, ces questions portant ici sur les paramètres du contrôle-commande du système HVAC 10 à réaliser.

A partir de cette description complète (éléments thermiques + boucles de régulation) du système HVAC 10 réalisée par l'utilisateur, par l'intermédiaire du logiciel de description, des simulations du système modélisé vont être mises en oeuvre par des modules de calcul du logiciel afin d'obtenir les valeurs des paramètres des boucles de régulation à partir desquelles il sera possible de programmer le ou les contrôleurs de la partie commande 14 du système HVAC 10 afin d'assurer le contrôle-commande du système HVAC 10, et des paramètres du générateur de points de consigne 32, comportant notamment les valeurs des points de consigne optimums destinés à être appliqués en entrée des différentes boucles de régulation, et permettant d'optimiser la consommation énergétique du système HVAC 10 en la minimisant.

En effet, pour chaque boucle de régulation, l'utilisateur a la possibilité de décrire des points de consigne de valeurs fixes. Toutefois, ces valeurs fixes ne sont généralement pas optimales en termes de consommation énergétique du système HVAC, notamment en raison des grandeurs physiques internes et externes qui peuvent varier et influer sur les performances énergétiques du système. Afin d'optimiser la consommation énergétique du système, il est donc préférable de faire varier les valeurs des points de consigne en fonction de ces grandeurs physiques internes et externes qui peuvent influer sur le fonctionnement du système : c'est le rôle rempli par le générateur de point de consigne 32 représenté sur la figure 2. L'optimisation énergétique réalisée grâce au procédé décrit ici consiste donc à faire varier ces points de consigne en fonction des valeurs des grandeurs physiques internes et externes afin de déterminer, pour chaque point de fonctionnement du système HVAC 10, les points de consigne optimums des différentes boucles de régulation, dans le but de minimiser la consommation énergétique du système HVAC 10.

Pour cela, une simulation en régime permanent du système HVAC 10 va être réalisée (étape 106). Cette simulation en régime permanent est réalisée à partir de la modélisation obtenue par la description du système précédemment réalisée par l'intermédiaire du logiciel de description. Les valeurs des points de consigne des boucles de régulation définies par les boîtes de régulation 70 (correspondant au point de consigne appliqué sur l'entrée 30 de la boucle de régulation 26), ainsi que les valeurs des grandeurs physiques internes et externes sont considérées comme des variables d'entrée pour cette simulation du système HVAC en régime permanent.

Pour réaliser cette simulation en régime permanent, l'utilisateur peut rentrer également, en tant que données d'entrée, des contraintes sur les valeurs des points de consigne et sur les commandes des actionneurs (par exemple, pour un moteur, que la vitesse doit être comprise entre 30 Hz et 50 Hz). L'utilisateur peut rentrer également les valeurs maximales et/ou minimales que peuvent prendre une ou plusieurs grandeurs physiques internes et externes.

Une fois que toutes ces données sont entrées dans le logiciel, un module de calcul du logiciel va simuler le comportement du système HVAC en régime permanent, c'est-à-dire lorsque les sorties, ici les valeurs des signaux de commande destinés à être appliqués en entrée des actionneurs, sont stables dans lé temps (c'est-à-dire, pour un signal de commande u, tel que du/dt = 0). Lors du fonctionnement du système HVAC en régime permanent, pour chaque boucle de régulation, la valeur de la consigne appliquée en entrée de la boucle de régulation est sensiblement égale à la valeur de la mesure qui est appliquée en entrée de la boucle de régulation (l'erreur calculée par la boucle de régulation étant dans ce cas sensiblement nulle).

Les variables obtenues en sortie de cette simulation en régime permanent correspondent aux signaux de commande destinés à être envoyés en entrée des actionneurs du système HVAC 10. Etant donné que ces valeurs sont stables (régime permanent), le module de calcul peut alors calculer, à partir des valeurs de ces signaux et des modèles électriques et thermiques des éléments du système HVAC 10, la puissance électrique absorbée par le système HVAC 10 en régime permanent.

Cette simulation en régime permanent est donc réalisée en balayant les valeurs possibles des grandeurs physiques internes et externes. S'il y a n grandeurs physiques internes et externes, on appelle D, domaine de ces grandeurs physiques, l'ensemble des valeurs que peuvent prendre ces grandeurs physiques $G1$, ..., $Gn$ tel que : $D = (G1, G2, ..., Gn)$.

Le module de calcul du logiciel échantillonne le domaine D en un ensemble fini de points formant un ensemble Dd (domaine D discrétisé). Pour chaque point de Dd, le module détermine les valeurs des points de consigne optimums à appliquer permettant d'obtenir une consommation énergétique minimale pour le système. On obtient ainsi une fonction foptimum qui, à chaque point de Dd, associe une valeur telle que :

$$\text{foptimum} : Dd = \{(G1, \ldots, Gn)\} \rightarrow \{(\text{consigne } 1, \text{consigne } 2, \ldots)\}$$

La valeur associée à chaque point de Dd est donc déterminée afin que cette valeur soit celle pour laquelle la consommation énergétique du système est la plus faible.

Ensuite, chaque valeur de point de consigne optimum est évaluée sous la forme d'une fonction mathématique qui sera par exemple, avantageusement, un polynôme en G1, ..., Gn. Les coefficients du polynôme peuvent alors être déterminés par une méthode des moindres carrés à partir des deux ensembles Dd et foptimum(Dd). On obtient ainsi les valeurs des coefficients de chaque polynôme :

$$\text{Consigne 1} = P1(G1, G2, G3, ...) \, ;$$

$$\text{Consigne 2} = P2(G1, G2, G3, ...) \, ;$$

etc.

Ces valeurs des coefficients forment donc une liste de paramètres pour le générateur de points de consigne 32, qui sera utilisée pour la programmation du ou des contrôleurs de la partie commande 14 du système HVAC 10.

Cette simulation en régime permanent permet donc de déterminer, en fonction des valeurs des grandeurs physiques internes et externes, les valeurs optimales des points de consigne à appliquer aux boucles de régulation afin de minimiser la consommation énergétique du système HVAC 10 tout en respectant les contraintes imposées par l'utilisateur.

Une simulation du système en régime dynamique est ensuite mise en oeuvre afin de déterminer les paramètres des boucles de régulation 26 du système HVAC 10 (étape 108). Ces paramètres des boucles de régulation sont obtenus en déterminant les fonctions de transfert de chacun des éléments thermiques, correspondant aux rapports entre les valeurs des grandeurs physiques de sortie y et les valeurs des signaux de commande u et de grandeurs physiques externes et internes à l'élément thermique 20 influant sur les performances énergétiques et les performances de la régulation de l'élément thermique 20.

Pour réaliser cette simulation en régime dynamique, chaque élément 20 est supposé être par exemple un système du 1er ordre avec retard, c'est-à-dire un système dont chacune des fonctions de transfert est du type :

$$\frac{y}{u} = \frac{Ke^{-\theta p}}{1 + \tau p} \, ,$$

avec

    y : grandeur physique de sortie
    u : signal d'entrée (signal de commande ou grandeur physique interne ou externe)
    K : gain
    $\Theta$ : retard
    $\tau$ : constante de temps.

Bien qu'un modèle du 1er ordre représente un bon compromis entre la précision des résultats obtenus et la complexité des calculs mis en oeuvre, il est tout à fait possible que le modèle utilisé soit d'un ordre supérieur au 1er ordre.

Une telle simulation en régime dynamique permet d'évaluer, en fonction des grandeurs physiques externes ou internes et des commandes des actionneurs (par exemple, la température extérieure, la température de l'eau sur le retour de tuyaux, le débit d'eau dans des pompes, la vitesse de rotation d'un ventilateur, ...), les valeurs des grandeurs physiques de sortie qu'on souhaite asservir (température de surchauffe, haute pression, basse pression, débit...), qui serviront ensuite à déterminer les paramètres des boucles de régulation.

Pour cela, un module de calcul du logiciel fait varier des valeurs de signaux appliqués sur les entrées 22 et 23 (destinées à recevoir les signaux de commande et les grandeurs physiques) des éléments thermiques 20 du système HVAC modélisé, c'est-à-dire applique des signaux transitoires, tels que des échelons de commande, sur ces entrées 22 et 23. Ces échelons de commande sont appliqués autour du point de fonctionnement désiré par l'utilisateur, ce point de fonctionnement correspondant aux consignes et aux grandeurs physiques externes au système : température extérieure, débits, etc.

Le logiciel réalise un échantillonnage des signaux obtenus en sortie de la simulation et détermine alors, pour chaque réponse obtenue (c'est-à-dire pour chaque échelon de commande appliqué), des valeurs des variables K, θ et T de chaque fonction de transfert. Enfin, à partir de toutes les valeurs obtenues, et en appliquant par exemple une méthode des moindres carrés, le module de calcul détermine alors les paramètres K, θ et T à appliquer pour chaque boucle de régulation.

Dans un mode de réalisation particulier, il est possible d'utiliser les points de consigne optimums obtenus grâce à la simulation en régime permanent en tant que données d'entrée pour réaliser la simulation du système en régime dynamique. Ainsi, cette simulation en régime dynamique est réalisée au point de fonctionnement particulier souhaité par l'utilisateur et pour lequel la consommation énergétique du système HVAC est minimale.

Les paramètres de régulation et d'optimisation énergétique obtenus par la mise en oeuvre des simulations en régime permanent et en régime dynamique sont ensuite utilisés pour programmer le ou les contrôleurs du système HVAC (étape 110).

Un module fonctionnel du logiciel peut utiliser ces paramètres pour générer des blocs fonctionnels, c'est-à-dire des algorithmes codés dans un langage de programmation, destinés à être importés directement ou par l'intermédiaire d'un logiciel de programmation dans le ou les contrôleurs de la partie commande 14 du système HVAC 10.

Les blocs fonctionnels ainsi obtenus à partir des simulations en régime dynamique et en régime permanent sont des algorithmes sous forme de codes informatiques permettant d'effectuer la régulation et l'optimisation énergétique des différents éléments du système HVAC 10.

Lorsque les contrôleurs de la partie commande 14 sont des contrôleurs programmables, le langage de ces codes correspond alors au langage de programmation du ou des contrôleurs de la partie commande 14 du système HVAC 10, et correspond par exemple au langage C ou au langage « structured text ». Le code de chaque bloc fonctionnel est alors exporté sous forme d'un fichier, par exemple crypté, sur un moyen de stockage d'information (serveur, disque dur, clé USB, CD-ROM). Le ou les fichier(s) ainsi exportés peuvent ensuite être importés dans un logiciel de programmation des contrôleurs et ainsi être utilisés par la personne en charge de la programmation des contrôleurs (étape 110). La programmation pourra notamment consister à définir les interactions entre le ou les blocs fonctionnels relatifs à l'optimisation énergétique, avec les blocs fonctionnels relatifs à la régulation du système HVAC 10. Les sorties du ou des blocs fonctionnels relatifs à l'optimisation énergétique, sur lesquelles sont délivrés les points de consigne optimum, seront notamment reliées aux entrées des blocs fonctionnels qui concernent la régulation, chaque bloc fonctionnel de régulation pouvant recevoir en entrée le point de consigne optimum relatif à l'élément destiné à être régulé par ce bloc fonctionnel de régulation. L'utilisateur télécharge ensuite le programme de commande généré à partir de la programmation précédemment réalisée dans la mémoire du ou des contrôleurs programmables.

Dans une variante de réalisation, le ou les contrôleurs peuvent ne pas être des contrôleurs programmables, mais des contrôleurs paramétrables. Dans ce cas, la programmation n'est pas réalisée par l'utilisateur, ce dernier transférant dans ce cas au contrôleur la liste des paramètres, ces données étant directement transférées (directement ou par le biais d'un support de données) dans le ou les contrôleurs paramétrables sans être codées sous la forme d'algorithmes. Par contre, il est possible que les paramètres soient transférés de manière cryptée afin, par exemple, de pouvoir verrouiller certaines fonctionnalités en fonction d'un niveau d'offre choisi par l'utilisateur.

Il est également possible que les paramètres de régulation et d'optimisation soient recopiés par l'utilisateur directement dans le ou les contrôleurs ou dans un logiciel de programmation des contrôleurs. Là encore, ces paramètres peuvent être fournis à l'utilisateur sous une forme cryptée pour des raisons de verrouillage de fonctionnalités et/ou pour éviter des erreurs lors de la copie des paramètres dans le ou les contrôleurs, par exemple en introduisant des codes d'erreurs mélangés aux paramètres.

Dans l'exemple précédemment décrit, la simulation en régime permanent est réalisée préalablement à la simulation en régime dynamique. Toutefois, il est également possible que la simulation en régime dynamique du système soit réalisée préalablement ou simultanément à la simulation en régime permanent du système HVAC.

Les algorithmes mis en oeuvre par le module de calcul seront fonction notamment de la nature des boucles de régulation (PID, commande prédictive, ...etc.). De plus, les modèles mathématiques relatifs au comportement thermique et électrique des éléments du système HVAC utilisés par le logiciel pour réaliser les simulations en régime dynamique et en régime permanent peuvent être des modèles mathématiques connus, par exemple décrits dans la thèse de P. Schalbart intitulée « Modélisation du fonctionnement en régime dynamique d'une machine frigorifique bi-étagée à turbo-compresseurs - Application à sa régulation », Ecole doctorale MEGA, 2006.

**Revendications**

1.  Procédé de détermination de paramètres de régulation d'un système HVAC (10) comportant des éléments thermiques (20) destinés à être régulés par des boucles de régulation (26), **caractérisé en ce qu'**il comporte au moins les étapes suivantes :

    - simulation en régime permanent du comportement thermique et électrique du système HVAC (10) modélisé par des modèles mathématiques du comportement thermique et électrique des éléments thermiques (20) du système HVAC (10), calculant la consommation énergétique du système HVAC (10) modélisé pour différentes valeurs de grandeurs physiques influant sur les performances énergétiques des éléments thermiques (20), et différentes valeurs de points de consigne destinés à être appliqués en entrée (30) des boucles de régulation (26),

- détermination des valeurs de points de consigne pour lesquels la consommation énergétique du système HVAC (10) modélisé est la plus faible,
- simulation en régime dynamique du comportement thermique et électrique du système HVAC (10) modélisé, calculant des valeurs de grandeurs physiques de sortie des éléments thermiques (20),
- calcul, à partir desdites valeurs des grandeurs physiques de sortie et pour chacune des boucles de régulation (26), des valeurs de paramètres des boucles de régulation (26).

2. Procédé selon la revendication 1, dans lequel la simulation en régime dynamique du comportement thermique et électrique du système HVAC (10) modélisé est réalisée en faisant varier des valeurs de signaux en entrée (22, 23) des éléments thermiques (20) du système HVAC (10) modélisé, le calcul des valeurs des paramètres des boucles de régulation (26) étant réalisé à partir de paramètres de fonctions de transfert des éléments thermiques correspondant aux rapports entre les valeurs des grandeurs physiques de sortie des éléments thermiques et les valeurs des signaux en entrée (22, 23) des éléments thermiques (20).

3. Procédé selon l'une des revendications précédentes, dans lequel les boucles de régulation (26) sont du type à commande prédictive.

4. Procédé selon l'une des revendications précédentes, dans lequel la simulation en régime dynamique du comportement thermique et électrique du système HVAC (10) modélisé est réalisée en appliquant successivement, sur les entrées (22, 23) de chaque élément thermique (20), des variations de signaux de type échelon.

5. Procédé selon l'une des revendications précédentes, dans lequel la simulation en régime dynamique du comportement thermique et électrique du système HVAC (10) modélisé est réalisée pour des valeurs des points de consigne pour lesquels la consommation énergétique du système HVAC (10) modélisé est la plus faible.

6. Procédé de régulation d'un système HVAC (10) comportant des éléments thermiques (20), comportant au moins les étapes de :

   - modélisation thermique et électrique du système HVAC (10) par des modèles mathématiques du comportement thermique et électrique des éléments thermiques (20) du système HVAC (10),
   - définition de boucles de régulation (26) dans le système HVAC (10) modélisé, destinées à être mises en oeuvre par au moins un contrôleur (14) du système HVAC (10), chaque boucle de régulation (26) étant associée à au moins un élément thermique (20) du système HVAC (10) et prenant en compte des grandeurs physiques influant sur les performances énergétiques dudit élément thermique (20) et la qualité de régulation dudit élément thermique (20),
   - mise en oeuvre d'un procédé de détermination de paramètres de régulation du système HVAC (10) selon l'une des revendications précédentes,
   - programmation du contrôleur (14) du système HVAC (10) à partir des valeurs des points de consigne et des valeurs des paramètres des boucles de régulation (26) calculées lors du procédé de détermination des paramètres de régulation du système HVAC (10).

7. Procédé selon la revendication 6, dans lequel la modélisation thermique et électrique du système HVAC (10) comporte au moins les étapes de :

   - description des éléments thermiques (20) du système HVAC (10) dans un logiciel de description associant le comportement thermique de chaque type d'élément thermique (20) à un desdits modèles mathématiques,
   - description, dans le logiciel de description, de liaisons hydrauliques et/ou électriques entre les éléments thermiques (20),
   et dans lequel la définition des boucles de régulation (26) comporte des étapes de description, dans le logiciel, de :
   - régulateurs (70) aptes à effectuer une régulation en boucle fermée des éléments thermiques (20) associés aux boucles de régulation (26),
   - capteurs de mesure (66, 68) des grandeurs physiques de sortie des éléments thermiques (20) disposés sur les liaisons hydrauliques, dont les mesures sont destinées à être délivrées en tant que signaux d'entrée aux régulateurs (70),
   - pré-actionneurs associés aux éléments thermiques (20) et destinés à recevoir en entrée des signaux de commande délivrés par les régulateurs (70).

8. Procédé selon la revendication 7, comportant en outre, préalablement à la mise en oeuvre du procédé de détermination des paramètres de régulation du système HVAC (10), une étape de définition de gammes de valeurs possibles des signaux de commande destinés à être délivrés par les régulateurs (70).

9. Procédé selon l'une des revendications 7 ou 8, dans lequel la simulation en régime permanent du comportement thermique du système HVAC (10) modélisé détermine en outre des valeurs des signaux de commande destinés à être appliqués en entrée des éléments thermiques (20).

10. Procédé selon l'une des revendications 6 à 9, dans lequel la définition des boucles de régulation (26) comporte en outre une définition de gammes de valeurs possibles des points de consigne des boucles de régulation (26).

11. Procédé selon l'une des revendications 6 à 10, comportant en outre, préalablement à la mise en oeuvre du procédé de détermination des paramètres de régulation du système HVAC (10), une étape de définition de gammes de valeurs possibles des grandeurs physiques.

12. Procédé selon l'une des revendications 6 à 11, dans lequel, lorsque le contrôleur (14) du système HVAC (10) est un contrôleur programmable, la programmation du contrôleur (14) est réalisée au moins par la mise en oeuvre des étapes suivantes :

   - définition d'interactions, dans un logiciel de programmation de contrôleur, entre des algorithmes relatifs à l'optimisation énergétique du système HVAC (10) basés sur lesdites valeurs déterminées des points de consigne et des algorithmes relatifs à la régulation du système HVAC (10) basés sur lesdites valeurs calculées des paramètres des boucles de régulation (26),
   - génération d'un programme de commande codant lesdits algorithmes et les interactions précédemment définies,
   - chargement du programme de commande dans le contrôleur programmable (14).

13. Procédé selon l'une des revendications 6 à 11, dans lequel, lorsque le contrôleur (14) du système HVAC (10) est un contrôleur paramétrable, la programmation du contrôleur (14) comporte au moins une étape d'entrée des valeurs déterminées des points de consigne et des valeurs calculées des paramètres des boucles de régulation (26) dans le contrôleur (14).

14. Procédé selon l'une des revendications 6 à 13, dans lequel la programmation du contrôleur (14) du système HVAC (10) est réalisée à partir de données dans lesquelles les valeurs des points de consigne et les valeurs des paramètres des boucles de régulation (26) calculées lors du procédé de détermination des paramètres de régulation du système HVAC (10) sont cryptées.

15. Dispositif de détermination de paramètres de régulation d'un système HVAC (10) comportant des éléments thermiques (20) destinés à être régulés par des boucles de régulation (26), comportant des moyens de mises en oeuvre d'un procédé de détermination de paramètres de régulation d'un système HVAC (10) selon l'une des revendications 1 à 5.

**Patentansprüche**

1. Verfahren zur Bestimmung von Parametern zur Steuerung eines HVAC-Systems (10), umfassend Thermoelemente (20), die dazu bestimmt sind, von Steuerschleifen (26) gesteuert zu werden, **dadurch gekennzeichnet, dass** es mindestens die folgenden Schritte umfasst:

   - im Dauerbetrieb Simulation des thermischen und elektrischen Verhaltens des HVAC-Systems (10), das durch mathematische Modelle des thermischen und elektrischen Verhaltens der Thermoelemente (20) des HVAC-Systems (10) modelliert wird, wobei der Energieverbrauch des HVAC-Systems (10) berechnet wird, das für verschiedene Werte von physikalischen Größen, die die energetischen Leistungen der Thermoelemente (20) beeinflussen, und verschiedene Sollpunktwerte, die dazu bestimmt sind, am Eingang (30) der Steuerschleifen (26) angewandt zu werden, modelliert wird,
   - Bestimmung der Sollpunktwerte, für die der Energieverbrauch des modellierten HVAC-Systems (10) am geringsten ist,
   - im dynamischen Betrieb Simulation des thermischen und elektrischen Verhaltens des modellierten HVAC-Systems (10), wobei Werte von physikalischen Ausgangsgrößen der Thermoelemente (20) berechnet werden,

- anhand der Werte der physikalischen Ausgangsgrößen und für jede der Steuerschleifen (26) Berechnung der Werte von Parametern der Steuerschleifen (26).

2. Verfahren nach Anspruch 1, bei dem die Simulation des thermischen und elektrischen Verhaltens des modellierten HVAC-Systems (10) im dynamischen Betrieb erfolgt, wobei Werte von Signalen am Eingang (22, 23) der Thermoelemente (20) des modellierten HVAC-Systems (10) variiert werden, wobei die Berechnung der Werte der Parameter der Steuerschleifen (26) anhand von Parametern von Transferfunktionen der Thermoelemente entsprechend den Verhältnissen zwischen den Werten der physikalischen Ausgangsgrößen der Thermoelemente und den Werten der Signale am Eingang (22, 23) der Thermoelemente (20) erfolgt.

3. Verfahren nach einem der vorhergehenden Ansprüche, bei dem die Steuerschleifen (26) vom Typ mit prädiktiver Steuerung sind.

4. Verfahren nach einem der vorhergehenden Ansprüche, bei dem die Simulation des thermischen und elektrischen Verhaltens des modellierten HVAC-Systems (10) im dynamischen Betrieb erfolgt, wobei nacheinander an die Eingänge (22, 23) jedes Thermoelements (20) Variationen von Signalen vom Typ Sprungsignal angelegt werden.

5. Verfahren nach einem der vorhergehenden Ansprüche, bei dem die Simulation des thermischen und elektrischen Verhaltens des modellierten HVAC-Systems (10) im dynamischen Betrieb für Sollpunktwerte erfolgt, für die der Energieverbrauch des modellierten HVAC-Systems (10) am geringsten ist.

6. Verfahren zur Steuerung eines HVAC-Systems (10), umfassend Thermoelemente (20), umfassend mindestens die folgenden Schritte:

   - thermische und elektrische Modellierung des HVAC-Systems (10) durch mathematische Modelle des thermischen und elektrischen Verhaltens der Thermoelemente (20) des HVAC-Systems (10),
   - Definition von Steuerschleifen (26) in dem modellierten HVAC-System (10), die dazu bestimmt sind, durch mindestens einen Kontroller (14) des HVAC-Systems (10) eingesetzt zu werden, wobei jede Steuerschleife (26) mindestens einem Thermoelement (20) des HVAC-Systems (10) zugeordnet ist, und wobei physikalische Größen berücksichtigt werden, die die energetischen Leistungen des Thermoelements (20) und die Steuerqualität des Thermoelements (20) beeinflussen,
   - Einsatz eines Verfahrens zur Bestimmung von Steuerparametern des HVAC-Systems (10) nach einem der vorhergehenden Ansprüche,
   - Programmieren des Kontrollers (14) des HVAC-Systems (10) anhand der Sollpunktwerte und der Werte der Parameter der Steuerschleifen (26), die beim Verfahren zur Bestimmung der Steuerparameter des HVAC-Systems (10) berechnet wurden.

7. Verfahren nach Anspruch 6, bei dem die thermische und elektrische Modellierung des HVAC-Systems (10) mindestens die folgenden Schritte umfasst:

   - Beschreibung der Thermoelemente (20) des HVAC-Systems (10) in einer Beschreibungssoftware, die das thermische Verhalten jedes Thermoelementtyps (20) einem der mathematischen Modelle zuordnet,
   - Beschreibung von hydraulischen und/oder elektrischen Verbindungen zwischen den Thermoelementen (20) in der Beschreibungssoftware,
   und bei dem die Definition der Steuerschleifen (26) Beschreibungsschritte in der Software umfasst von:
   - Reglern (70), die geeignet sind, eine Steuerung der den Steuerschleifen (26) zugeordneten Thermoelemente (20) in einer geschlossenen Schleife durchzuführen,
   - Messern (66, 68) der physikalischen Ausgangsgrößen der Thermoelemente (20), die auf den hydraulischen Verbindungen angeordnet sind, deren Messungen dazu bestimmt sind, als Eingangssignale an die Regler (70) geliefert zu werden,
   - Vorbetätigern, die den Thermoelementen (20) zugeordnet und dazu bestimmt sind, am Eingang Steuersignale zu empfangen, die von den Reglern (70) geliefert werden.

8. Verfahren nach Anspruch 7, ferner umfassend vor dem Einsatz des Verfahrens zur Bestimmung der Steuerparameter des HVAC-Systems (10) einen Schritt der Definition von möglichen Wertebereichen der Steuersignale, die dazu bestimmt sind, von den Reglern (70) geliefert zu werden.

9. Verfahren nach einem der Ansprüche 7 oder 8, bei dem die Simulation des thermischen Verhaltens des modellierten HVAC-Systems (10) im Dauerbetrieb ferner Werte der Steuersignale bestimmt, die dazu bestimmt sind, am Eingang der Thermoelemente (20) angewandt zu werden.

10. Verfahren nach einem der Ansprüche 6 bis 9, bei dem die Definition der Steuerschleifen (26) ferner eine Definition von möglichen Wertebereichen der Sollpunkte der Steuerschleifen (26) umfasst.

11. Verfahren nach einem der Ansprüche 6 bis 10, ferner umfassend vor dem Einsatz des Verfahrens zur Bestimmung der Steuerparameter des HVAC-Systems (10) einen Schritt der Definition von möglichen Wertebereichen der physikalischen Größen.

12. Verfahren nach einem der Ansprüche 6 bis 11, bei dem, wenn der Kontroller (14) des HVAC-Systems (10) ein programmierbarer Kontroller ist, die Programmierung des Kontrollers (14) zumindest durch den Einsatz der folgenden Schritte erfolgt:

   - Definition von Interaktionen in einer Programmiersoftware des Kontrollers zwischen Algorithmen, die sich auf die energetische Optimierung des HVAC-Systems (10) beziehen, die auf den bestimmten Sollpunktwerte basieren, und Algorithmen, die sich auf die Steuerung des HVAC-Systems (10) beziehen, die auf den berechneten Werten der Parameter der Steuerschleifen (26) basieren,
   - Erstellung eines Steuerprogramms, das die Algorithmen und die Interaktionen, die vorher definiert wurden, codiert,
   - Laden des Steuerprogramms in den programmierbaren Kontroller (14).

13. Verfahren nach einem der Ansprüche 6 bis 11, bei dem, wenn der Kontroller (14) des HVAC-Systems (10) ein parametrierbarer Kontroller ist, die Programmierung des Kontrollers (14) mindestens einen Schritt des Eingangs der bestimmten Sollpunktwerte und der berechneten Werte der Parameter der Steuerschleifen (26) in dem Kontroller (14) umfasst.

14. Verfahren nach einem der Ansprüche 6 bis 13, bei dem die Programmierung des Kontrollers (14) des HVAC-Systems (10) auf Basis von Daten erfolgt, in denen die Sollpunktwerte und die Werte der Parameter der Steuerschleifen (26), die bei dem Verfahren zur Bestimmung der Steuerparameter des HVAC-Systems (10) berechnet wurden, verschlüsselt sind.

15. Vorrichtung zur Bestimmung von Steuerparametern eines HVAC-Systems (10), umfassend Thermoelemente (20), die dazu bestimmt sind, durch Steuerschleifen (26) gesteuert zu werden, umfassend Mittel zum Einsatz eines Verfahrens zur Bestimmung von Steuerparametern eines HVAC-Systems (10) nach einem der Ansprüche 1 bis 5.

**Claims**

1. Method for determining parameters for regulating an HVAC system (10) comprising thermal elements (20) designed to be controlled by regulation loops (26), **characterized in that** it comprises at least the following steps:

   - simulation in steady state of the thermal and electrical behaviour of the HVAC system (10) modelled by mathematical models of the thermal and electrical behaviour of the thermal elements (20) of the HVAC system (10), computing the energy consumption of the HVAC system (10), modelled for various values of physical magnitudes influencing the energy performance of the thermal elements (20), and various values of set points designed to be applied as input (30) of the regulation loops (26),
   - determination of the values of the set points for which the energy consumption of the modelled HVAC system (10) is the lowest,
   - simulation in dynamic state of the thermal and electrical behaviour of the modelled HVAC system (10), computing the values of output physical magnitudes of the thermal elements (20),
   - computation, based on said values of output physical magnitudes and for each of the regulation loops (26), of the parameter values of the regulation loops (26).

2. Method according to Claim 1, in which the simulation in dynamic state of the thermal and electrical behaviour of the modelled HVAC system (10) is carried out by varying values of input signals (22, 23) of the thermal elements (20) of the modelled HVAC system (10), the computation of the values of the parameters of the regulation loops (26) being carried out based on parameters of transfer functions of the thermal elements corresponding to the ratios between the values of the output physical magnitudes of the thermal elements and the values of input signals (22, 23) of the thermal elements (20).

3. Method according to one of the preceding claims, in which the regulation loops (26) are of the predictive control type.

4. Method according to one of the preceding claims, in which the simulation in dynamic state of the thermal and electrical behaviour of the modelled HVAC system (10) is carried out by successively applying, on the inputs (22, 23) of each thermal element (20), signal variations of a step type.

5. Method according to one of the preceding claims, in which the simulation in dynamic state of the thermal and electrical behaviour of the modelled HVAC system (10) is carried out for values of the set points for which the energy consumption of the modelled HVAC system (10) is lowest.

6. Method for regulating an HVAC system (10) comprising thermal elements (20), comprising at least the steps of:

- thermal and electrical modelling of the HVAC system (10) by mathematical models of the thermal and electrical behaviour of the thermal elements (20) of the HVAC system (10),
- definition of regulation loops (26) in the modelled HVAC system (10), designed to be used by at least one controller (14) of the HVAC system (10), each regulation loop (26) being associated with at least one thermal element (20) of the HVAC system (10) and taking account of the physical magnitudes influencing the energy performance of the said thermal element (20) and the quality of regulation of the said thermal element (20),
- use of a method for determining parameters for regulating the HVAC system (10) according to one of the preceding claims,
- programming of the controller (14) of the HVAC system (10) based on the values of the set points and on the values of the parameters of the regulation loops (26) computed during the method for determining parameters for regulating the HVAC system (10).

7. Method according to Claim 6, in which the thermal and electrical modelling of the HVAC system (10) comprises at least the steps of:

- description of the thermal elements (20) of the HVAC system (10) in a description software associating the thermal behaviour of each type of thermal element (20) with one of the said mathematical models,
- description, in the description software, of hydraulic and/or electrical links between the thermal elements (20), and in which the definition of the regulation loops (26) comprises steps of description, in the software, of:
- regulators (70) capable of carrying out a closed-loop regulation of the thermal elements (20) associated with the regulation loops (26),
- sensors (66, 68) for measuring output physical magnitudes of the thermal elements (20) placed on the hydraulic links, of which the measurements are designed to be delivered as input signals to the regulators (70),
- pre-actuators associated with the thermal elements (20) and designed to receive as inputs control signals delivered by the regulators (70).

8. Method according to Claim 7, also comprising, prior to the use of the method for determining parameters for regulating the HVAC system (10), a step of defining ranges of possible values of control signals designed to be delivered by the regulators (70).

9. Method according to one of Claims 7 and 8, in which the simulation in steady state of the thermal behaviour of the modelled HVAC system (10) also determines values of the control signals designed to be applied at the input of the thermal elements (20).

10. Method according to one of Claims 6 to 9, in which the definition of the regulation loops (26) also comprises a definition of ranges of possible values of the set points of the regulation loops (26).

11. Method according to one of Claims 6 to 10, also comprising, prior to the use of the method for determining parameters for regulating the HVAC system (10), a step of defining ranges of possible values of the physical magnitudes.

12. Method according to one of Claims 6 to 11, in which, when the controller (14) of the HVAC system (10) is a programmable controller, the programming of the controller (14) is carried out at least by the use of the following steps:

- definition of interactions, in a controller programming software, between algorithms relating to the energy optimization of the HVAC system (10) based on the said determined values of the set points and algorithms relating to the regulation of the HVAC system (10) based on said computed values of the parameters of the regulation loops (26),
- generation of a control program encoding the said algorithms and the previously defined interactions,
- loading of the control program into the programmable controller (14).

13. Method according to one of Claims 6 to 11, in which, when the controller (14) of the HVAC system (10) is a parameterizable controller, the programming of the controller (14) comprises at least one step of entering determined values of the set points and computed values of the parameters of the regulation loops (26) into the controller (14).

14. Method according to one of Claims 6 to 13, in which the programming of the controller (14) of the HVAC system (10) is carried out based on data in which the values of the set points and the values of the parameters of the regulation loops (26) computed during the method for determining parameters for regulating the HVAC system (10) are encrypted.

15. Device for determining parameters for regulating an HVAC system (10) comprising thermal elements (20) designed to be regulated by regulation loops (26), comprising means for using a method for determining parameters for regulating an HVAC system (10) according to one of Claims 1 to 5.

FIG. 1

FIG. 2

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* US 20030018399 A

**Littérature non-brevet citée dans la description**

* **P. SCHALBART.** Modélisation du fonctionnement en régime dynamique d'une machine frigorifique bi-étagée à turbo-compresseurs - Application à sa régulation. *la thèse,* 2006